# EUROPEAN PATENT SPECIFICATION

(11) **EP 2 106 120 B1**
(45) Date of publication and mention of the grant of the patent: **12.12.2012**
(21) Application number: 08153377.0
(22) Date of filing: 27.03.2008
(51) Int. Cl.: H04N 5/00, H04N 7/24

(54) **Broadcast picture display method and a digital broadcast receiver using the same**
Rundfunk-Bildanzeigeverfahren und digitaler Rundfunkempfänger damit
Procédé d'affichage d'image diffusée et récepteur de diffusion numérique l'utilisant

(43) Date of publication of application: 30.09.2009
(73) Proprietor: Samsung Electronics Co., Ltd., Suwon-si, Gyeonggi-do, 443-742 (KR)
(72) Inventor: Seo, Jeong Wook, Gyeonggi-do (KR)
(74) Representative: Grünecker, Kinkeldey, Stockmair & Schwanhäusser

(56) References cited:
- EP-A- 1 489 838
- EP-A- 1 675 399
- US-A- 6 115 080
- US-A1- 2007 143 800

## Description

### BACKGROUND OF THE INVENTION

### 1. Field of the Invention:

The present invention relates to a digital broadcast receiver. More particularly, the present invention relates to an apparatus and method for displaying broadcast data during a channel switching period.

### 2. Description of the Related Art:

A digital broadcast receiver is an apparatus that restores digital data that is received from a broadcast signal transmitted by a broadcast station. The digital data is coded and modulated so as to be broadcast in the form of a broadcast signal by the broadcast station. The digital broadcast receiver demodulates and decodes the received broadcast signal in order to restore the original digital data. Accordingly, the digital broadcast receiver is provided with a tuner, a demodulator, and a decoder. Digital broadcast systems are classified into a digital multimedia broadcast (DMB) system and a digital video broadcasting (DVB) system. These digital broadcast systems provide a plurality of service channels in a frequency bandwidth and each service channel is structured with multiplexed sub-channels of video, audio, and program information data.

Currently, mobile terminals provide an enhanced multimedia playback function by using a dedicated multimedia processor, particularly for a digital broadcast playback function. As used herein, the term "mobile terminals" includes mobile phones, laptop computers, Personal Digital Assistants (PDAs), Portable Multimedia Players (PMPs) and the like. Such a mobile terminal may also be provided with a radio frequency unit for supporting radio communication.

In a conventional digital broadcast receiver, the pictures represented by received broadcast signals are displayed in a playback mode. However, pictures are not displayed during a channel switching period even though the playback mode is selected. That is, the conventional digital broadcast receiver cannot receive the broadcast signals during the channel switching period such that no picture is displayed on the screen of the digital broadcast receiver. This causes an inconvenience for the user.

### SUMMARY OF THE INVENTION

An aspect of the present invention is to address the above-mentioned problems and/or disadvantages and to provide at least the advantages as described below. Accordingly, an aspect of the present invention is to provide a broadcast picture display method for a digital broadcast receiver that is capable of displaying a broadcast picture represented by broadcast signals received first on a switched service channel as a still picture during a channel switching period.

Another aspect of the present invention is to provide a broadcast picture display method for a digital broadcast receiver that is capable of displaying, when a preset amount of broadcast signals are buffered, broadcast pictures represented by broadcast signals buffered on a switched service channel before receiving a synchronization signal by preset time interval during a channel switching period.

Still another aspect of the present invention is to provide a broadcast picture display method for a digital broadcast receiver that is capable of displaying a broadcast picture received at first on a switched service channel as a still picture and, when a preset amount of broadcast signals are buffered, displaying broadcast pictures represented by the buffered broadcast signals by preset time interval during a channel switching period, and then, when a synchronization signal is received, displaying broadcast pictures in synchronization with audio.

In accordance with an aspect of the present invention, a broadcast picture display method for a digital broadcast receiver is provided. The method includes setting a switched-service channel in a channel switching period, buffering broadcast data received on the switched-service channel and displaying specific video data detected in the broadcast data.

In accordance with another aspect of the present invention, a broadcast picture display method for a digital broadcast receiver is provided. The method includes setting a switched-service channel in response to a channel switching request in a channel switching period, displaying specific video data detected on the switched-service channel as a still picture, playing video and audio data buffered after the specific video data with reference to a local time of the digital broadcast receiver, and playing, when timestamp information is received, the video and audio data buffered after the timestamp information in synchronization with each other, the synchronization being acquired by compensating a time offset between the video and audio data.

In accordance with yet another aspect of the present, a broadcast picture display method for a digital broadcast receiver is provided. The method includes setting a service channel in response to a broadcast playback request, displaying specific video data detected on the service channel as a still picture, playing video and audio data buffered after the specific video data with reference to a local time of the digital broadcast receiver and playing, when timestamp information is received, the video and audio data buffered after the timestamp information in synchronization with each other, the synchronization being acquired by compensating a time offset between the video and audio data.

Other aspects, advantages, and salient features of the invention will become apparent to those skilled in the art from the following detailed description, which, taken in conjunction with the annexed drawings, discloses exemplary arrangements of the invention.

### BRIEF DESCRIPTION OF THE DRAWINGS

The above and other aspects, features and advantages of certain exemplary embodiments of the present invention will be more apparent from the following description taken in conjunction with the accompanying drawings, in which:

FIG. 1 is a block diagram illustrating a configuration of a digital broadcast receiver ;

FIG. 2 is a block diagram illustrating an exemplary broadcast reception unit of the digital broadcast receiver (DVB-H receiver) of FIG. 1;

FIG. 3 is a block diagram illustrating an exemplary protocol processing unit of the digital broadcast receiver of FIG. 1;

FIGs. 4A-F are diagrams illustrating an exemplary data frame format of a transport stream for a DVB-H system;

FIG. 5 is a diagram illustrating an exemplary structure of a physical channel of a DVB-H system;

FIG. 6 is a flowchart illustrating a display method for a digital broadcast receiver;

FIG. 7 is a flowchart illustrating an exemplary I-frame display method of FIG. 6 in more detail;

FIG. 8 is a flowchart illustrating an exemplary broadcast data playback step in more detail; and

FIG. 9 is a block diagram illustrating a configuration of a mobile terminal equipped with a digital broadcast receiver.

Throughout the drawings, it should be noted that like reference numbers are used to depict the same or similar elements, features and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. Also, descriptions of well-known functions and constructions are omitted for clarity and conciseness.

In order to enable a clear and consistent understanding of the following description and claims, basic information on the following terms is provided. Unless otherwise noted, terms are to be understood according to conventional usage by those skilled in the relevant art.

In the following description, exemplary broadcast picture display methods of the present invention are described with reference to a digital broadcast receiver and a mobile terminal equipped with a digital broadcast receiver. Digital broadcast systems include Digital Multimedia Broadcasting (DMB), Digital Video Broadcasting (DVB), and Media Forward Link Only (Media FLO) systems. Furthermore, DVB is classified into DVB Terrestrial (DVB-T) and DVB Handheld (DVB-H). The DVB-H broadcasts data using Internet Protocol (IP).

An exemplary broadcast picture display method of the present invention is described in association with a DVB-H system. However, the present invention is not limited to DVB-H systems but can be adapted to mobile terminals supporting other systems such as DVB, DMB, and Media FLO services.

The following definitions are provided to enable a clear and consistent understanding of the description and claims below.

A "channel" is a frequency channel selected by a tuner, a "service" is a logical channel assigned a program identifier or product identifier (PID) for a broadcast service, and an "event" means a program provided through the service channel. In order to avoid complication, the term "physical channel" is used for representing the "channel", and the term "service channel" is used for representing the "service." The service channels are multiplexed in the physical channel. The physical channel can be represented by the frequency band set by the tuner, and the service channels are represented by the broadcast stations or service providers. The service channel can be identified with a PID in the DMB and DVB-T systems. In the case of DVB-H, the service channel is identified with a combination of PID, IP address, and port number. In the following exemplary embodiments, certain frames are composed of frame video data that are coded without reference to other frame video data except themselves or with reference to other frame video data once. Such a frame is called an Intra (I) frame.

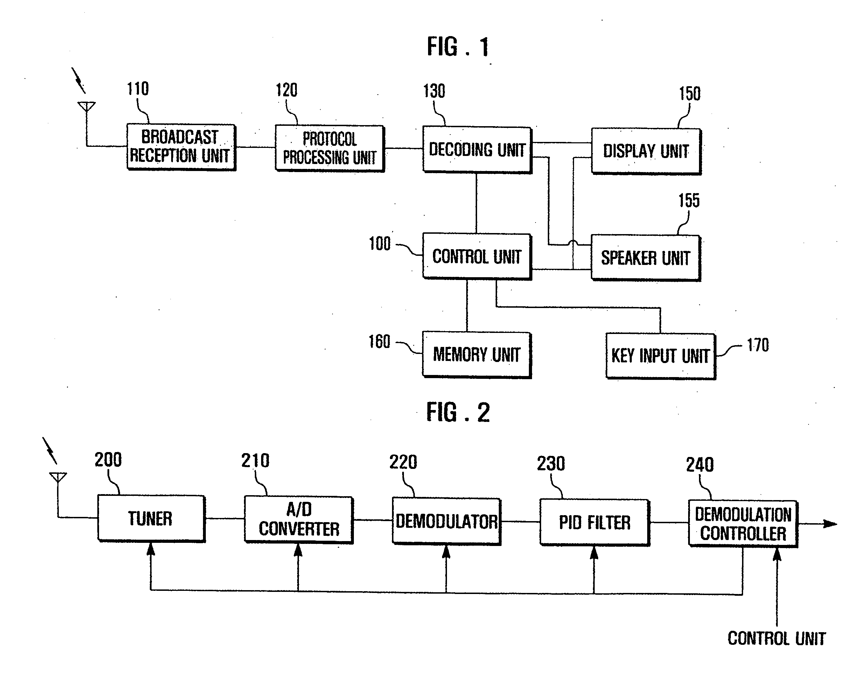

FIG. 1 is a block diagram illustrating a configuration of a digital broadcast receiver.

Referring to FIG. 1, the digital broadcast receiver includes a broadcast reception unit 110, a protocol processing unit 120, a decoding unit 130, a display unit 150, a speaker unit 155, a memory unit 160, a key input unit 170, and a control unit 100.

The control unit 100 controls general operations of the digital broadcast receiver. The key input unit 170 generates commands in response to key manipulation and transmits the commands to the control unit 100. Particularly, the key input unit 170 is configured to generate commands such as a channel selection command, a playback command, a recording command, and a channel switching command. In an exemplary embodiment, if a channel switching command is input at the beginning of a playback mode or during the playback mode, the control unit 100 controls to display the broadcast picture of a switched service channel. That is, the control unit 100 controls switching broadcast pictures during the channel switching period.

The memory unit 160 includes a program memory for storing an application program for controlling the digital broadcast receiver and a data memory for storing application data produced while the application programs are executed. The program memory also stores an application program for quickly displaying a broadcast picture of a switched service channel in response to the channel switching command or a broadcast playback mode activation command.

The broadcast reception unit 110 receives broadcast streams on the service channel selected by the user under the control of the control unit 100. The protocol processing unit 120 performs protocol processing on the broadcast streams so as to separately extract audio, video, and broadcast information data from the service channel. In the case of DVB-H, the protocol processing unit 120 decapsulates IP datagrams, and extracts the audio, video, and program data from the IP datagrams. In the case of DMB and DVB-T, the protocol processing unit 120 analyzes a transport stream (TS) and demultiplexes the audio and video data from the TS.

The decoding unit 130 is provided with an audio decoder, a video decoder, and a data decoder. The audio decoder performs decoding on the audio data and outputs the decoded audio data. The video decoder performs decoding on the video data and outputs the decoded video data. The data decoder performs decoding on the broadcast information data. In an exemplary arrangement, the decoding unit 130 is provided with the audio and video decoders, and the data decoder is implemented in the control unit 100 in the form of software.

In an exemplary embodiment, the digital broadcast receiver is configured to display, when channel switching is requested in the broadcast playback mode, the broadcast picture of a switched service channel.

In the case of a conventional digital broadcast receiver, when a user switches service channels, it takes a few seconds for the digital broadcast receiver to normally display the broadcast data received on the switched service channel (which is called channel switching delay). The channel switching delay occurs because the digital broadcast receiver starts decoding the broadcast signals by a preset amount. In some devices, in order to moderate the inconvenience caused by the channel switching delay, the digital broadcast receiver is configured to display a screen that indicates channel switching is occurring or display a preset image during the channel switching period. Also, since the digital broadcast data is composed of audio, video, and broadcast information that is synchronized in time, the conventional digital broadcast receiver performs a synchronization process for acquiring synchronization among the received audio, video, and broadcast information data. This synchronization causes an increase in the channel switching delay time.

In an exemplary arrangement, if service channel switching is requested, the control unit 100 determines a specific frame of video data received on the switched service channel and displays a picture represented by the specific frame video data on the screen of the display unit 150 while buffering the received broadcast data. Thus, it is possible to quickly display the picture represented by the broadcast data of the switched service channel. The picture represented by the specific frame can be displayed until a preset amount of broadcast data is buffered. If the received broadcast data reaches the preset amount, the control unit 100 controls to start playing video and audio data extracted from the buffered broadcast data. In an exemplary arrangement, the audio and video data may be played before the synchronization control signal (i.e., "timestamp") is received. Also, the non-synchronized audio and video data playbacks are maintained until the timestamp is received. Upon receiving the timestamp, the control unit 100 starts playing the audio and video data in synchronization with each other. Here, the specific frame is the I-frame which will be discussed in detail below.

The buffer size is preferably set in the range of 1 to 3 seconds. The timestamp may include a decoding timestamp (DTS) for synchronizing decoding start times and a presentation timestamp (PTS) for controlling the output times of the decoded audio and video data. The timestamp may include at least one of DTS and PTS such that the synchronization of the audio and video data can be acquired using the audio and video DTSs or audio and video PTSs.

When switching between service channels, the control unit 100 inspects the broadcast data of the switched service channel output by the protocol processing unit 120. At this time, if the received video data represents a specific frame, the control unit 100 controls the decoding unit 130 to decode the video data of the specific frame and controls the display unit 150 to display the video data. Here, the decoded video data frame can be composed of an Infra frame (I-frame), a Previous frame or Predicted frame (P-frame), and a Bidirectional frame (B-frame).

Because the I-frame can be decoded independently of other frames, it is preferred to use the I-frame as the specific frame which is displayed as a still picture. In contrast, a P-frame is a video frame encoded with dependence to a closest past frame (here, I-frame), which can be an I-frame. And a B-frame is a video frame encoded relative to the past frame, future frame, or both (I- and P-frames).

While the I-frame video data is displayed, the control unit 100 controls the decoding unit 130 to buffer the broadcast data which is continued to be received on the switched service channel in its input buffer. If the buffered broadcast data reaches the preset amount, the control unit 100 controls the audio decoder and video decoder to decode the received audio and video data such that they are output through the speaker unit 155 and the display unit 150, respectively.

In an exemplary implementation, the buffer size is set to an amount of data to be played in the range of 1 to 3 seconds. The DVB system using the Phase Alternating Line (PAL) scheme processes 25 frames per second and the DMB system using the National Television System Committee (NTSC) scheme processes about 30 frames per second. Accordingly, in the case of a DVB system, it is preferred to set the buffer size to a data amount corresponding to 25 to 75 frames. The buffered broadcast data can be played, for example, in the form of motion pictures. In this case, the broadcast data can be output through the display unit 150 and the speaker unit 155 without synchronization to each other.

If a timestamp is received while buffering the broadcast data, the control unit 100 acquires synchronization between the audio and video data using an offset of the audio and video timestamps. Once the audio and video are synchronized with each other, the audio and video data are played normally.

In an exemplary implementation, the channel switching is performed with a two- or three- step intermission picture display process. In the case of a two-step intermission picture display process, the second step can be skipped. In this case, the control unit 100 controls to capture and display the first I-frame received in the service channel switching period. Next, the control unit 100 synchronizes the audio and video frame using the audio and video timestamp offsets and then plays audio and video data in synchronization with each other.

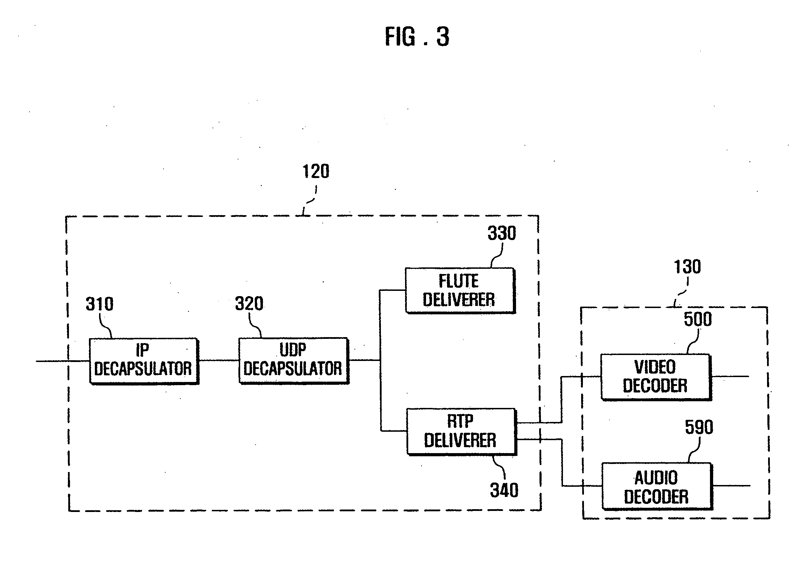

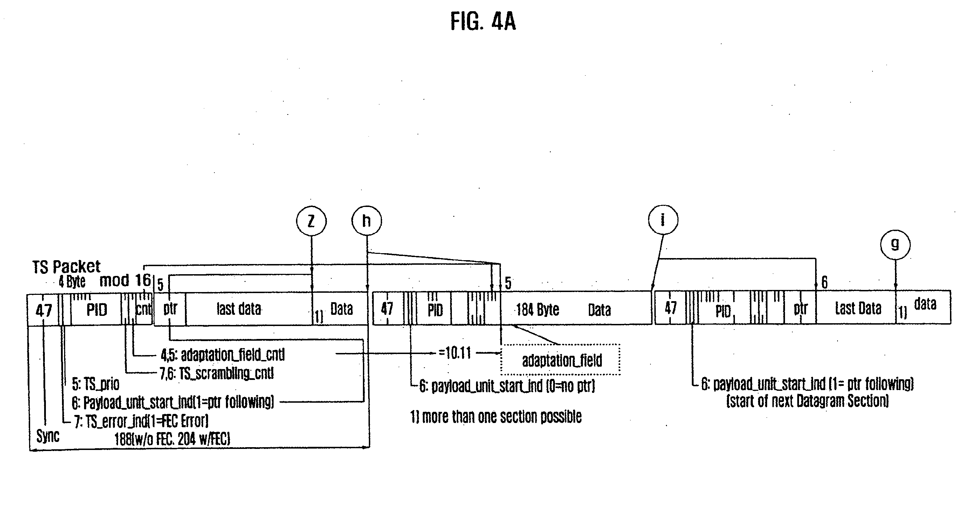

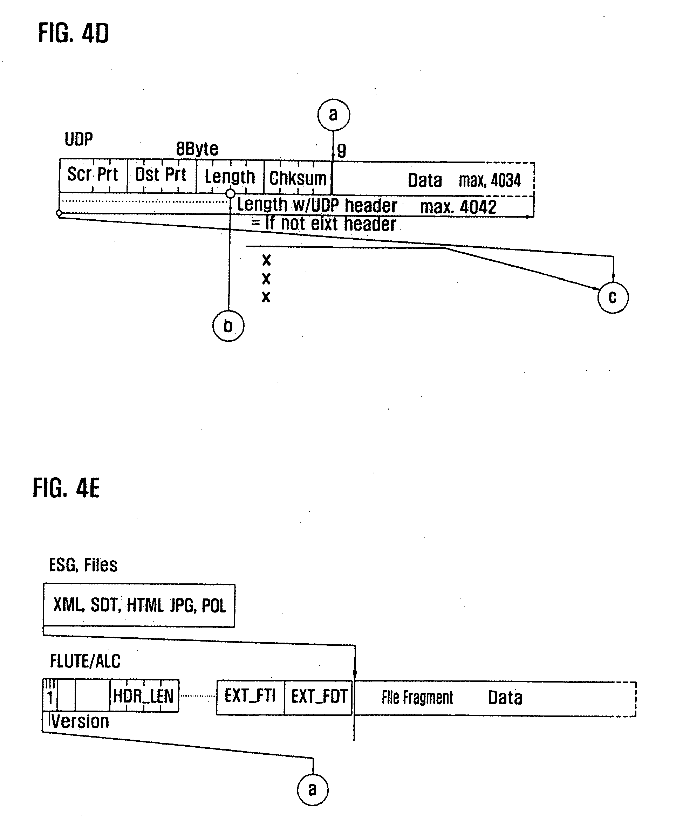

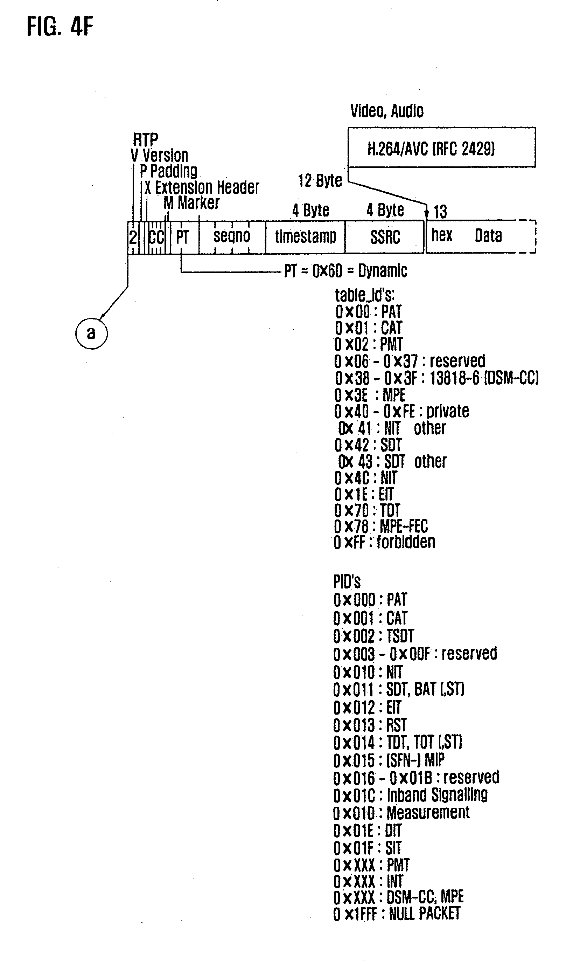

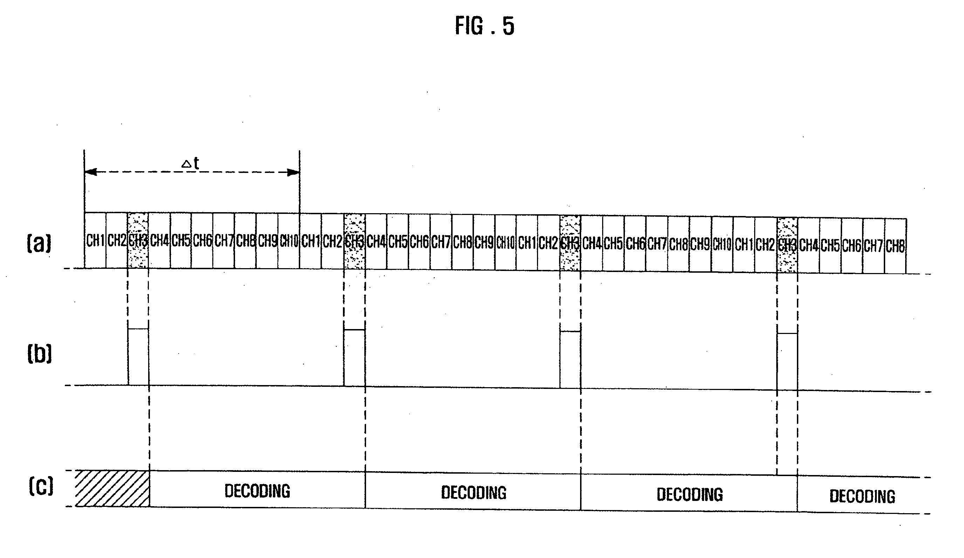

FIG. 2 is a block diagram illustrating an exemplary broadcast reception unit of a digital broadcast receiver, in this example a DVB-H receiver, FIG. 3 is a block diagram illustrating an exemplary protocol processing unit of a digital broadcast receiver, FIGs. 4A-F are diagrams illustrating an exemplary data frame format of a transport stream for a DVB-H system, and FIG. 5 is a diagram illustrating an exemplary structure of a physical channel of a DVB-H system.

Referring to FIGs. 4A-F, the broadcast data of a DVB-H system is structured in the form of a Motion Picture Experts Group 2 transport stream (MPEG2-TS) The MPEG2-TS format is implemented as a packet stream, wherein each packet contains 4 bytes of packet header and 184 bytes of payload. The packet header contains packet synchronization and packet identification (PID) information. The PID can be used as a service identifier for identifying a service channel and program data contained in the payload. The payload consists of multi protocol encapsulation (MPE) sections. Each MPE section includes a table identifier (table_ID), MPE forward error correction (MPE-FEC) information for correcting errors of the received data, and information for dividing the received data in time. Each MPE section also contains at least one IP datagram. In FIGs. 4A-F, an IPv6 datagram is depicted as an example. The IP datagram includes an IP version information, as well as a source IP address and a destination IP address. The IP datagram consists of user datagram protocol (UDP) units and each UDP unit includes port addresses of the transmitter and receiver. Using the destination IP address, the broadcast service can be provided to a specific IP user in an IP datacast rather than the broadcast. The UDP unit contains FLUTE/ALC units and a real time transport protocol (RTP) unit. The FLUTE/ALC unit includes the ESG and files, and the RTP unit includes audio and video data.

Referring to FIG. 5, a frame consists of a plurality of service channels that are multiplexed using a time division scheme. The frame has a duration (Δt) and is sliced into 10 timeslots. Each time slot is assigned for a service channel. In an exemplary embodiment, the term "burst time" is interchangeably used with the frame duration. In this manner, the service channels are transmitted in the frame duration.

In FIG. 5, 10 service channels, e.g. CH1 to CH10, are multiplexed in a frame and channel 3 (CH3) is selected as a current service channel. In this case, the timeslot represented by the channel 3 is a burst-on time and the timeslots represented by channel 1, channel 2, and channel 4 to channel 10 become burst-off time. The broadcast data of the service channels are transmitted at the respective timeslots for corresponding service channels. When using the time division scheme, the broadcast reception unit 110 can predict the burst time of the current service channel and the burst times of other service channels. In an exemplary implementation, the broadcast reception unit 110 receives the broadcast data through the channel 3 (CH3) and the broadcast data are decoded for the duration Δt that is substantially identical with the frame length. The decoded data are output through the display unit 150 as a viewable image. Such a timeslot based-power supply and data decoding technique is called "time division technique" and such a timing control method is called "time division control."

Referring to FIG. 2, an exemplary broadcast reception unit 110 includes a tuner 200 and a broadcast data demodulator. The broadcast data demodulator includes an analog/digital (A/D) converter 210, a demodulator 220, a PID filter 230, and a demodulation controller 240. The tuner 200 is tuned to the physical channel of the DVB-H so as to receive the service channels constituting the physical channel. The tuner 200 includes a phase-locked loop (PLL) circuit for generating a frequency for the physical channel, a mixer for mixing the received signal and the signal generated by the PLL, and a band-pass filter for passing the frequency of the physical channel.

The demodulation controller 240 controls the tuner 200 to be tuned to the physical channel and controls the PID filter 230 to be set with PIDs of the primary and secondary service channels, under the control of the control unit 100. At this time, the control unit 100 analyzes a Program Specific Information/Service Information (PSI/SI) output from the broadcast reception unit 110 and Service Description Table (SDT) information included in an Electronic Service Guide (ESG) so as to extract the PIDs, IP addresses, and port numbers associated with the selected service channels. If the PID filtered by the PID filter 230 is a Network Information Table (NIT) PID, Service Description Table (SDT) PID, or Event Information Table (EIT) PID, the control unit 100 can determine the physical channel and PIDs of the service channels from the PSI/SI carried in the tables. The protocol processing unit 120 extracts SDT from the ESG (see FIG. 4E) and the control unit 100 can determine the PIDs, IP addresses, and port numbers for indentifying the service channels and video and audio data. The control unit 100 determines the PIDs, IP addresses, and port numbers of the service channels and audio and video data of each service channel on the basis of the information of the SDT. After the service channels are determined, the control unit 100 outputs control signals to the demodulation controller 240 for filtering the physical channel and PIDs of the service channels.

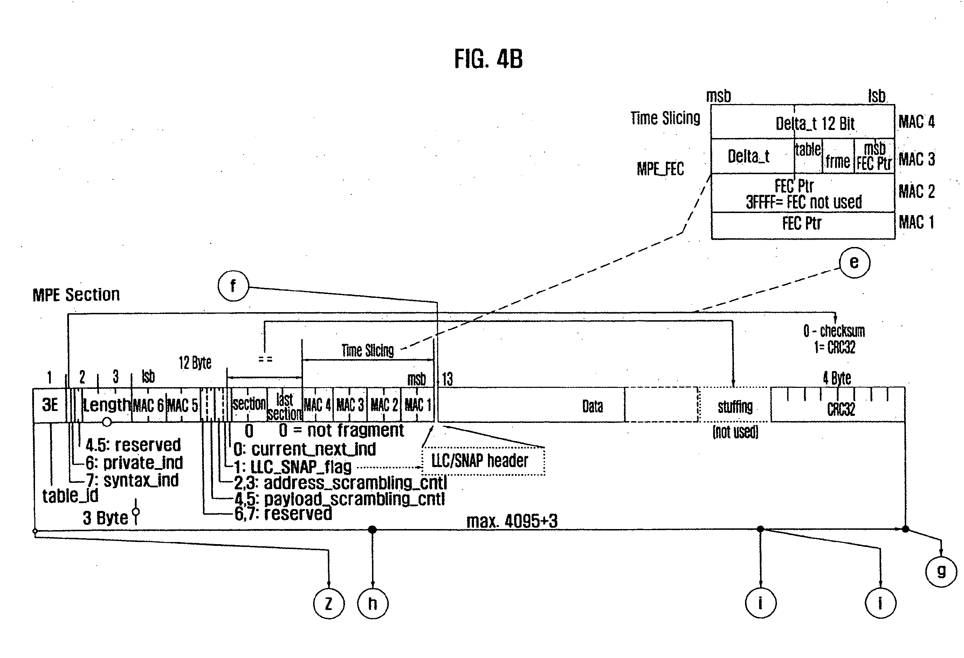

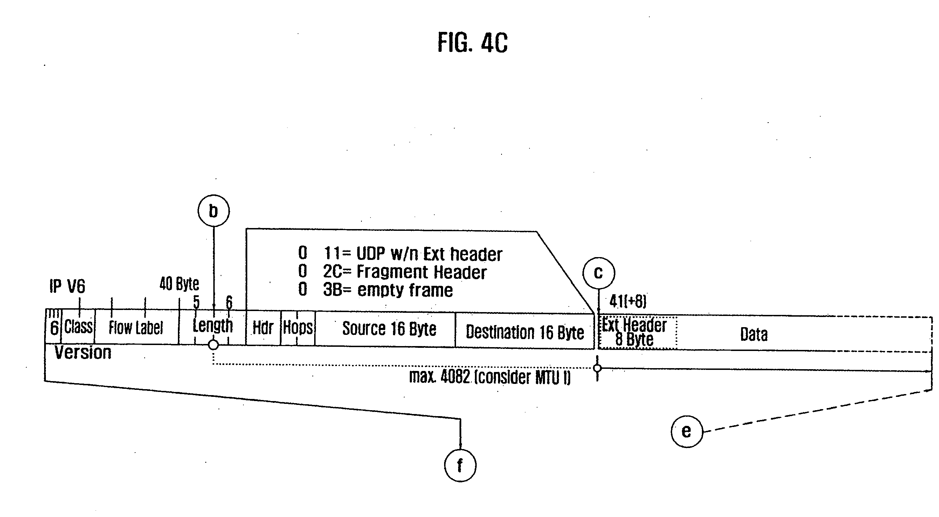

The demodulation controller 240 sets the tuner 200 with the frequency of the DVB-H and sets the PID filter 230 with the PIDs of the primary and secondary service channels. The tuner 200 is tuned to the DVB-H frequency to receive the broadcast signals, the A/D converter 210 converts the broadcast signals into digital broadcast streams, and the demodulator 220 demodulates the broadcast streams to recover the original broadcast data. The demodulator 220 can be implemented with an Orthogonal Frequency Division Multiplexing (OFDM) demodulator or a Coded OFDM (COFDM) demodulator 220. The broadcast streams output by the demodulator 220 can be the MPEG2-TS (see FIG. 4A) and each TS packet, in this case, includes a PID for identifying the service channel carried by the TS packet. The PID filter 230 filters the broadcast data having the PIDs of the primary and secondary service channels from the IP datagram (see FIG. 4C) and transmits the PSI/SI information to the control unit 100. The broadcast data passed through the PID filter 230 can include the MultiProtocol Encapsulation-Forward Error Correction (MPE-FEC) sections and time division information. In this case, the demodulation controller 240 performs time division control on the burst data. That is, the demodulation controller 240 controls the tuner 110 and demodulator 220 to be switched on using the time division information. The time division information includes the burst-on time information of the primary and secondary service channels such that the demodulation controller 240 controls the tuner 200 and the demodulator 220 to be switched on at the burst-on times and switched off at the burst-off times. Also, the demodulation controller 240 performs the MPE-FEC functions on the broadcast data of the primary and secondary service channels output by the PID filter 230 using the MPE section information (see FIG. 4B).

As described above, the demodulation controller 240 controls the tuner 200 to be tuned to the DVB-H frequency and the PID filter 230 to be set with the PIDs of the primary and secondary service channels. Also, the demodulation controller 240 performs the time division to reduce power consumption of the digital broadcast receiver on the basis of the information of the MPE section and performs the MPE-FEC function for correcting reception errors. The data output by the demodulation controller 240 is the IP datagram (FIG. 4C).

In the above-structured digital broadcast receiver, the tuner 200 is tuned to the DVB-H frequency, the A/D converter 210 converts the broadcast signal received through DVB-H frequency into digital broadcast streams, and the demodulator 220 demodulates the digital broadcast streams in the OFDM or COFDM scheme. The demodulated broadcast stream has the MPEG2-TS packet stream format (see FIG. 4A) of which each TS packet includes a PID for identifying the service channel. The PID filter 230 determines the PIDs of TS packets and passes only the packet having the PIDs of PSI/SI and the primary and secondary service channels. The data carried by the packet having the PIDs associated with the PSI/SI are forwarded to the control unit 100, and the broadcast data of the primary and secondary service channels and the broadcast information data including ESG are output to the demodulation controller 240. The demodulation controller 240 analyzes the MPE sections (see FIG. 4B) and performs time division control and error corrections on the data of the PID filtered service channels.

FIG. 3 is a block diagram illustrating a configuration of a protocol processing unit of a DVB-H receiver.

Referring to FIG. 3, the protocol processing unit 120 determines the IP and other protocol information of the selected service channel data and extracts the video and audio data from the service channel data. The decoding unit 130 includes a video decoder 500 and an audio decoder 590 such that the video decoder 500 decodes the video data output from the protocol processing unit 120 and outputs the video data through the display unit 150 as a viewable image. Similarly, the audio decoder 590 decodes the audio data output from the protocol processing unit 120 and outputs the audio data through the speaker unit 155 in the form of audible sound wave.

The protocol processing unit 120 includes an IP decapsulator 310, a UDP decapsulator 320, a FLUTE deliverer 330, and an RTP deliverer 340. The IP decapsulator 310 extracts an IP datagram of FIG. 4C from the MPE section of FIG. 4B and decapsulates the IP datagram to determine the source and destination IP addresses. The UDP decapsulator 320 extracts a UDP unit of FIG. 4E from the IP datagram and decapsulates the UDP unit to determine the source and destination port numbers. If the data carried by the UDP unit is FLUTE/ALC protocol data, the UDP decapsulator 320 transports the FLUTE/ALC protocol data to the FLUTE deliverer 330. If the data carried by the UDP unit is RTP data, the UDP decapsulator 320 transports the RTP data to the RTP deliverer 340. The FLUTE/ALC protocol data may include ESG or other type of data such as XML, SDT, HTML, JPG, and POL. The RTP data may include the audio and video data. The RTP deliverer 340 performs demultiplexing of the RTP data so as to output the video data to the video decoder 500 and the audio data to the audio decoder 590.

The protocol processing unit 120 operates under the control of the control unit 100. The control unit 100 can integrate an ESG engine (XML engine and ESG decoder), an SDT parser, and a PSI/SI decoder. The control unit 100 also can integrate a protocol information controller and manager for controlling the protocol process and management. The control unit 100 processes the protocol information and data received from the protocol processing unit 120. That is, the control unit 100 analyzes the PSI/SI table (NIT, SDT, and EIT) extracted by the broadcast reception unit 110 so as to determine the PSI/SI according to the MPEG-2 and DVB-SI standards, parses the ESG data received from the protocol processing unit 120, and then controls the overall operation of the broadcast reception unit 110 on the basis of this information. The service channels, ESG per service channel, and audio and video data are identified using the PID, IP, port information. That is, the PSI/SI and SDT is provided with tables defining information on the service channel identifiers, audio and video identifiers, and ESG identifiers. The control unit 100 can identify the service channels, audio data, video data, and ESG data with reference to the decoding result of the PSI/SI and the SDT. The control unit 100 may integrate the protocol processing unit 120.

The control unit 100 also controls the operation of the protocol processing unit 120. Typically, the MPEG-TS stream carries audio and video data. That is, the burst data is composed of the video and audio data. Accordingly, the control unit 100 analyzes the types of data received through the service channel and controls the internal elements to cooperate with each other according to the analysis result. That is, if an MPE section is received, the control unit 100 controls the demodulation controller 240 to receive the burst information such that the demodulation controller 240 analyzes the MPE section data and performs time division and MPE-FEC functions according to the analysis result. If an IPv6 datagram is contained in the MPE section, the control unit 100 controls the IP decapsulator 310 to extract the IP information. If a UDP unit is detected from the IPv6 datagram, the control unit 100 controls the UDP decapsulator 320 to extract the port numbers. If a FLUTE/ALC unit is contained in the UDP unit, the control unit 100 controls the FLUTE deliverer 330 for processing the ESG and equivalent file formats. If the RTP unit is contained in the UDP unit, the control unit 100 controls the RTP deliverer 340 for processing the RTP unit. The video and audio data output from the RTP deliverer 340 are delivered to the video decoder 500 and the audio decoder 590, respectively. The control unit 100 analyzes the data and activates internal processing blocks required for processing the data. Other internal elements that are not involved in the data processing bypass the data, resulting in improvement of data processing speed.

The video and audio data are output from the protocol processing unit 120 after being demultiplexed such that the video decoder 500 can decode the video data and output the decoded video data through the display unit 150 as a visual image, and the audio decoder 590 can decode the audio data and output the decoded audio data through the speaker unit 155 in the form of audible sound. The video decoder can be an H.264 standard decoder or an MPEG series decoder, and the audio decoder can be an advanced audio coding (AAC) decoder.

In the case of DMB, the broadcast reception unit can be implemented with only the tuner 200 and demodulator 220.

In this case, the broadcast reception unit outputs the packet streams in the structure of MPEG-TS. Also, the protocol processing unit 120 is composed of a demultiplexer. The demultiplexer analyzes the PID contained in the packet header of the received packet stream, selects the packets on the selected service channel on the basis of the PID, and determines the selected packets have the PES header. The PES header includes information indicating audio and video data, whereby the demultiplexer can distinguish the audio and video data packets from each other. Also, the PES header includes timestamp information so as to adjust the time offsets of the audio and video data. In the case of video packet, it is possible to determine whether the video data is I-frame or P-frame with reference to the PES header.

The operation of a DVB-H receiver for displaying the broadcast pictures during the channel switching period is described hereinafter.

The broadcast data output from the RTP deliverer 340 may include audio and video data, or timestamp and variable length of data. The variable length of data may be the audio and video data. The video data can be classified into I- and P-frame video data. In the case that the video data is coded using an H.264 coding scheme, the packet is composed of an 8-bit network abstraction layer (NAL) header and variable length of video data as shown in table 1.

**Table 1**

| | |
|---|---|
| NAL header | Data |

The NAL header consists of 3-bit priority and 5-bit NAL type. By analyzing the NAL type information, it is possible to predict whether the next frame is an I-frame or a P-frame. If a channel switching command is input through the key input unit 170, the control unit 100 changes the channel control information (in DVB-H, PID, IP address, and port number) for setting the switched service channel and controls such that the broadcast reception unit 110 is set with the PID of the switched service channel. Next, the broadcast reception unit 110 decodes the broadcast data on the switched service channel and outputs the decoded broadcast data to the protocol processing unit 120 such that the RTP deliverer 340 of the protocol processing unit 120 outputs the video data structured as shown in table 1. At this time, the control unit 100 captures the first I-frame received on the switched service channel. That is, the control unit 100 inspects the NAL type in the header of the video data structured as shown in table 1. If it is determined that the following data is I-frame data, the control unit 100 controls the video decoder 590 of the decoding unit 130 to decode the I-frame video data. The decoded I-frame video data is output to the display unit 105 so as to be displayed as a still picture.

The timestamp is not contained in all the video and audio data. That is, as shown in line (a) of FIG. 5, the timestamp may be included in a single burst or no timestamp may be included in multiple bursts. In order to synchronize and normally play the audio and video data together, the audio and video timestamps are required. However, only one of the audio and video data timestamps may be received. Furthermore, it may occur that, even when the preset amount of the broadcast data is received (here, the size of the broadcast data received at the burst time), neither the audio timestamp nor the video timestamp is received. In this case, the synchronization between the audio and video data fails. In an exemplary implementation, the buffered video and audio data are played at a preset time interval before acquiring the synchronization between the audio and video data. That is, the buffered audio and video data are played at a preset frame rate in accordance with a local clock of the digital broadcast receiver before the synchronization between the audio and video data is acquired. If the timestamp is received, the control unit 100 adjusts the time offsets of the buffered audio and video data and plays the audio and video data normally in synchronization with each other.

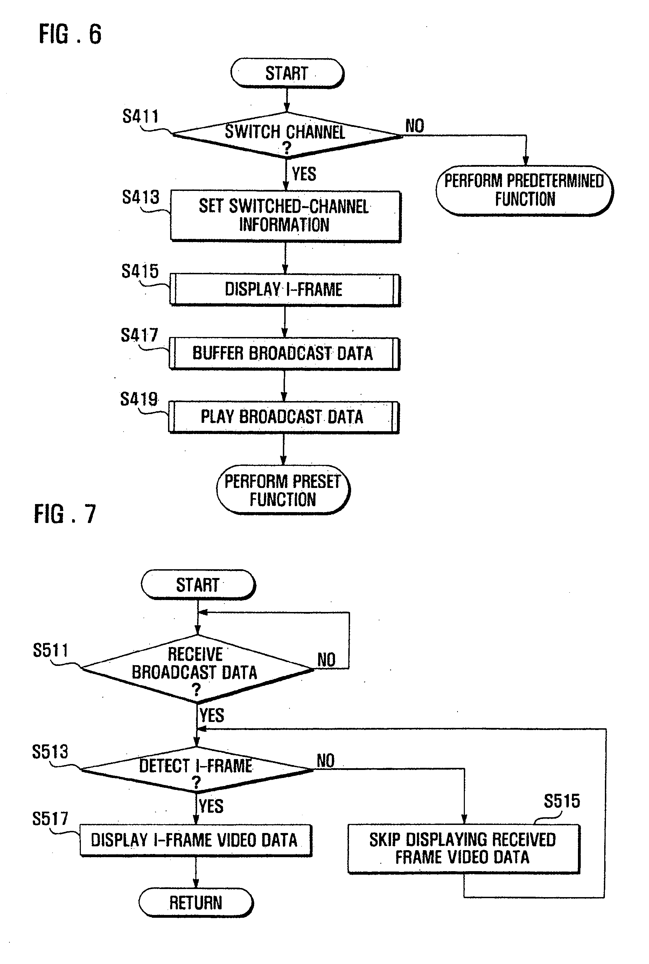

FIG. 6 is a flowchart illustrating a display method for a digital broadcast receiver. In this implementation, it is assumed that the display method is implemented with a DVB-H receiver.

Referring to FIG. 6, if a channel switching command is input through the key input unit 170 while playing a current service channel, the control unit 100 detects the channel switching command in step S411 and sets control information for selecting a switched service channel to be switched thereto in step S413. The control information includes the PID, IP, and port number of the switched service channel. The PID is transferred to the broadcast reception unit 110 such that the PID filter 230 is set with the PID of the switched service channel. The control unit 100 also informs the broadcast reception unit 110 of the time division information for receiving burst data of the switched service channel. The broadcast reception unit 110 controls such that the power is supplied at burst-on time of the switched service channel with reference to the time division information. Thus, the broadcast reception unit 110 selectively decodes the broadcast data on the switched service channel and outputs the decoded broadcast data to the protocol processing unit 120. The protocol processing unit 120 performs the protocol processing on the broadcast data received from the broadcast reception unit 110 and outputs audio, video, and broadcast data extracted from the broadcast data to their respective decoders of the decoding unit 130.

In step 415, the control unit 100 analyzes the video data of the switched service channel and captures the first I-frame video data such that the I-frame video data is displayed on the screen of the display unit 150.

FIG. 7 is a flowchart illustrating an exemplary I-frame display step in more detail.

Referring to FIG. 7, if the video data separated from the broadcast data is output from the protocol processing unit 110, the control unit detects the video data in step S511 and analyzes the header of the video data. In an exemplary embodiment, it is assumed that the video data is coded by an H.264 coding scheme and thus the video decoder 500 is an H.264 decoder. In this case, the video data output by the RTP deliverer 340 of the protocol processing unit 120 has a structure of table 1 composed of an NAL tag and data. The NAL tag includes NAL type information of 5 bits. The NAL type information also indicates the frame type of video data, i.e., I-frame or P-frame. Accordingly, the control unit 100 inspects the video data output by the protocol processing unit 120 in step S513 and skips displaying the video data that is not I-frame video data in step S515 and continues video data inspection. When an I-frame is detected during the video data inspection in step S513, the control unit 100 controls the video decoder 500 of the decoding unit 130 to decode the I-frame video data in step S517. That is, the video decoder 500 decodes the I-frame video data received on the switched service channel and outputs the decoded video data to the display unit 150 under the control of the control unit 100.

As described above, the control unit 100 controls such that the first I-frame data received on the switched service channel is captured and displayed, thereby quickly displaying the broadcast picture of the switched service channel during the channel switching period. Since the I-frame video data can be decoded without reference to other video data, unlike the P- and B- frame data, it can be used for fast broadcast picture display, resulting in moderation of an inconvenience caused by channel switching delay. Although it was described that the first I-frame is captured and displayed in this embodiment, the present invention includes embodiments in which any I-frame data following the first one is processed and displayed.

Once the first I-frame video data is decoded, other frame data (e.g. P-frame video data and B-frame video data) following the first I-frame video can also be decoded. Accordingly, the control unit 100 controls such that the broadcast data following the first I-frame video data is buffered at step S417 in FIG. 6. The broadcast data following the first I-frame video data includes the audio and video data. If the buffered broadcast data reach a preset amount, the control unit 100 controls the decoding unit to decode the buffered audio and video data at a preset decoding rate.

Once decoded, the buffered audio and video data may be played in step S419. The buffered broadcast data can be played through in a two-step procedure. The audio and video data of the broadcast data should be synchronized with each other in order to be played normally. For this reason, the video and audio data contain playback time control information such as DTS and PTS. However, the DTS and PTS timestamps are received irregularly. Accordingly, the control unit 100 controls the audio and video data to be decoded at the preset decoding rate on the basis of the amount of the buffered broadcast data and once a timestamp is received, the control unit 100 adjusts the time offsets of the audio and video data on the basis of the timestamp such that the audio and video data are normally played in synchronization with each other.

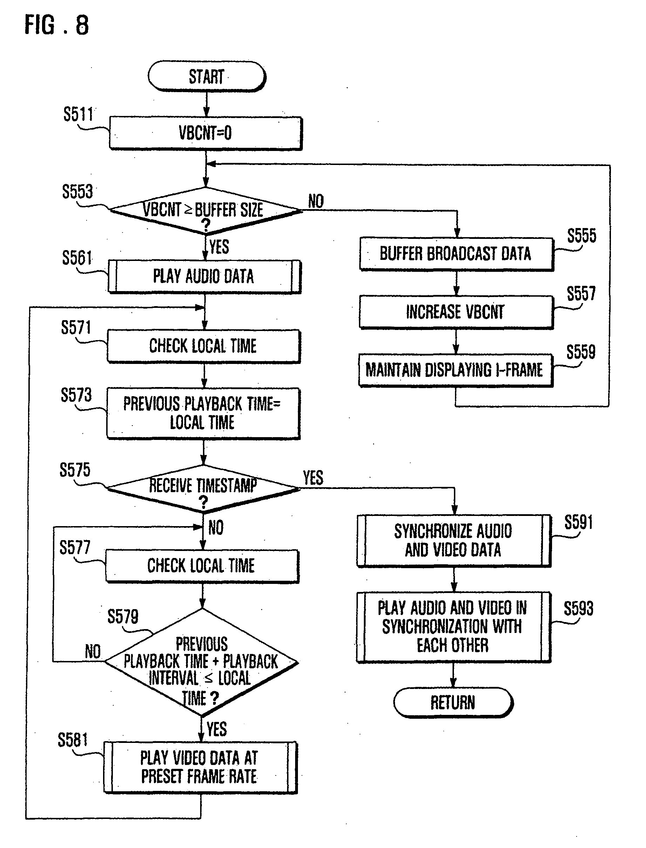

FIG. 8 is a flowchart illustrating an exemplary broadcast data playback step.

Referring to FIG. 8, after receiving the first I-frame of the switched service channel, the control unit 100 initializes a video input buffer (Vbcnt=0) in step S551 and starts buffering the audio and video data in the audio and video buffers (not shown). The input video and audio buffers are preferably arranged at the front ends of the respective video and audio decoders 500 and 590. While buffering the video data, the control unit 100 determines whether the amount of the video data buffered in the input video buffer is equal to or greater than a preset amount (in this exemplary embodiment, a buffer size of the input video buffer) in step S553. The buffer size can be set to a size of burst of the service channel, or 1 to 3 seconds in time. In the case of DVB-H system according to this exemplary embodiment, the DVB-H receiver processes 25 frames per second. Accordingly, the buffer size is preferably set for 25 to 75 frames. In this exemplary embodiment, it is assumed that the buffer size is set to 2 seconds for 50 frames. Before the input buffer is full, the control unit 100 detects that the input video buffer is not full in step S553. Accordingly, the control unit 100 continues buffering the video and audio data in the respective input buffers in step S555 and increases the count value (Vbcnt) in step S557. Furthermore, the control unit 100 controls such that the I-frame video data is continued to be displayed on the screen of the display unit 150 in step S559.

Repeating the above steps, if the count value becomes equal to or greater than the buffer size, the control unit 100 control the audio decoder 590 to decode and play the audio data buffered in the input audio buffer in step S561. Next, the control unit 100 checks the local clock of the digital broadcast receiver in step S571 and sets a previous playback time to the current local time in step S573. In this state, the timestamp may not yet have been received. In this case, the control unit 100 monitors to detect the timestamp in step S575. If no time stamp is received, the control unit 100 determines the current local time in step S577 and determines whether the time obtained by summing the previous playback time and the playback interval is less than or equal to the current local time in step S579.

If the time obtained by summing the previous playback time and the playback interval is less than or equal to the current local time, the control unit 100 controls the video decoder 500 to decode the video data buffered in the input video buffer in step 581)and, otherwise, repeats step S577.

If the buffered video data reaches the preset size while displaying the I-frame video data, the control unit 100 determines the local time of the digital broadcast receiver and controls to play the buffered video and audio data by a preset time interval. For example, if the digital broadcast receiver is a DVB-H receiver processing 25 frames per second and the play interval is one second, the control unit 100 determines the local time of the digital broadcast receiver and controls the video decoder 500 to decode the video data of 25 frames every one second at steps S577 and S579. Next, the control unit 100 changes the current local time to the previous playback time by repeating steps S571 and S573. Repeating the above steps, the control unit 100 controls to play the buffered broadcast data with reference to the local time of the digital broadcast receiver until the timestamp is received. In this case, a time offset can occur between the audio and video data playback times.

At this time, the video data decoded and output by the video decoder 500 is displayed on the screen of the display unit 150, while the audio data decoded by the audio decoder 590 is output through the speaker unit 155. In this manner, once the video and audio data are buffered as much as the preset amount, the digital broadcast receiver plays the buffered video and audio data at a preset play rate with reference to the local time of the digital broadcast receiver.

The timestamp information can be obtained from the RTCP output by the RTP deliverer 340. That is, the control unit 100 can determine the timestamp of the video data with reference to the RTCP. In the case that the RTCP is not received, the control unit 100 plays the audio and video data with reference to the local time of the digital broadcast receiver while performing steps S571 to S581. The RTCP is not carried regularly. That is, more than two RTCP can be contained in a single burst, or no RTCP may be contained in several continuous bursts. The control unit 100 can adjust the time offset between audio and video data when both the audio and video RTCPs are received. The audio RTCP includes the time information (audio DTS or PTS) for controlling the playback of the audio data, and the video RTCP includes the time information (video DTS or PTS) for controlling the playback of the video data. Accordingly, the control unit 100 calculates the time offset between the audio and video timestamps and acquires synchronization between the audio and video data by adjusting the time offset.

If the timestamp information is received at step S575, the control unit 100 determines the offset between the audio and video timestamps and compensates the offset to acquire the synchronization between the audio and video data in step S591. After acquiring the synchronization between the audio and video data, the control unit 100 controls the decoding timing of the video and audio decoders 500 and 590 (or the audio and video output buffer that are not shown in the drawings) such that the audio and video data are normally played in step S593.

As described above, an exemplary digital broadcast receiver of the present invention captures the first I-frame video data received during the channel switching period and displays the I-frame video data in the form of a still picture while buffering the broadcast data. If the buffered broadcast data reaches a preset amount, the digital broadcast receiver plays the buffered broadcast data with reference to device local time until the timestamp information of the broadcast data is received. If the timestamp information is received, the digital broadcast receiver compensates for the offset between the audio and video play times so as to play the audio and video data in synchronization with each other.

In an alternative implementation, the local time-based playback process can be omitted. In this case, the digital broadcast receiver waits until the timestamp is received while playing the audio signal and displaying the first I-frame received on the switched service channel as a still picture. If the timestamp information is received such that the synchronization of the audio and video data is acquired, the video data is normally displayed in synchronization with the audio data.

In another alternative implementation, the audio playback can be omitted during the display of the first I-frame video data. In this case, the digital broadcast receiver performs only the displaying of the first I-frame video data as a still picture before acquiring the synchronization of the video and audio data.

Although the exemplary broadcast picture display method of FIGs. 6 to 8 is described with reference to a DVB-H receiver, the present invention can be adopted to other receivers such as a DMB receiver. In a case in which the broadcast picture display method is implemented with a DMB receiver, the demodulation part of the broadcast reception unit 110 is implemented without a PID filter 230 and the demodulation controller 240, and the protocol processing unit 120 is implemented with a demultiplexer. Here, the information output by the broadcast reception unit 110 can be the TS packet stream such that the demultiplexer analyzes the video PES information contained in the TS packet stream for detecting the I-frame video data. Other structures and operations of the DMB receiver are similar to those of the DVB-H receiver.

Although the exemplary broadcast picture display method is described in association with a channel switching operation, the present invention is not limited thereto. For example, the broadcast picture display method can be implemented in association with the channel setting procedure in response to a broadcast playback mode activation request. That is, the broadcast picture display method of the present invention can be applied in the broadcast channel-setting step.

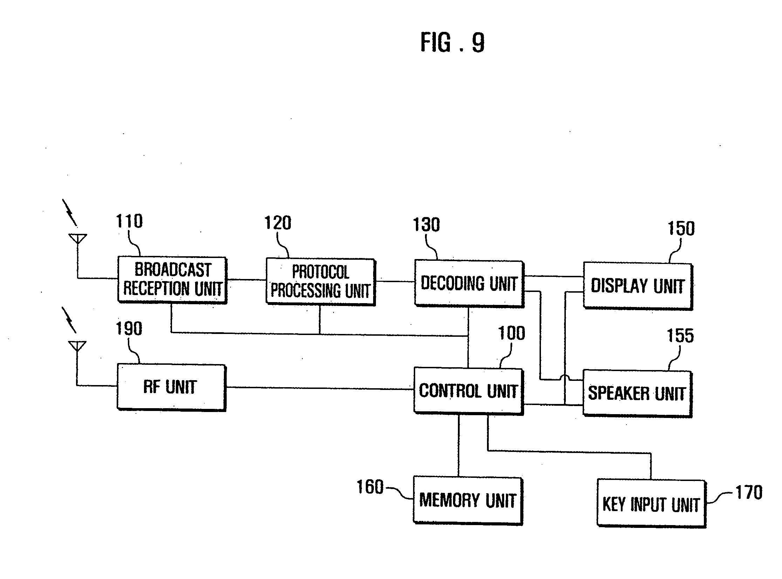

In another exemplary implementation, the above-structured digital broadcast receiver can be integrated into a mobile terminal. FIG. 9 is a block diagram illustrating a configuration of a mobile terminal equipped with a digital broadcast receiver according to an exemplary embodiment of the present invention.

Referring to FIG. 9, a mobile terminal equipped with a digital broadcast receiver includes a control unit 100, a broadcast reception unit 110, a protocol processing unit 120, a decoding unit 130, a display unit 150, a speaker unit 155, a memory unit 160, a key input unit 170, and a radio frequency (RF) unit 190. In such configuration, the control unit 100 controls both the radio communication and broadcast playback functions of the mobile terminal. The RF unit 190 includes a frequency converter for performing frequency up-conversion on transmitted signals and frequency down-conversion on received signals. The RF unit 190 also includes a modem for modulating transmitted signals and demodulating received signals and a codec for coding transmitted signals and decoding received signals. The modem and codec can be integrated into the control unit 100.

In an exemplary implementation, when the mobile terminal operates in a communication mode, the digital broadcast receiver may be disabled and the RF communication function is enabled with the operation of the RF unit 190.

In another exemplary implementation, the digital broadcast receiver embedded in the mobile terminal plays the broadcast data of a service channel selected by the user and enables the RF unit 190, when it is required to communicate with a service provider or a broadcast station, to establish a return channel.

As described above, the digital broadcast receiver may include the broadcast reception unit 110, protocol processing unit 120, and decoding unit 130. If a channel establishment or channel switching request is detected in the above-structured digital broadcast receiver, the control unit 100 changes the service channel information and resets the broadcast reception unit 110 and the protocol processing unit 120 with new service channel information. If a service channel is selected, the broadcast reception unit 110 performs the time division control for receiving the burst data on the selected service channel and receives the burst data on the service channel set with the PID of the received burst data. The protocol processing unit 120 performs the protocol processing on the received burst data. At this time, the control unit 100 captures the first I-frame video data received on the selected service channel and displays the I-frame video data on the screen of the display unit 150 while buffering the video and audio data constituting the broadcast data following the first I-frame video data in the respective video and audio input buffers.

Next, the control unit 100 starts playing the buffered video data, when the buffered video data reaches a preset amount, with reference to the local time of the mobile terminal until the audio and video timestamps are received. If the audio and video timestamps are received, the control unit 100 compensates the time offset between the audio and video data such that the video and audio data are normally played in synchronization with each other.

The mobile terminal can be set with an incoming call alert mode. Accordingly, if an incoming call is detected while the mobile terminal performs a broadcast picture display, the control unit 100 generates an incoming call alert. The incoming call alert mode includes a normal ringer mode and a mute mode. When the normal ringer mode is set, the control unit 100 indicates the incoming call using a ring tone such as a melody, a bell, music and the like together with display of caller information. The mute mode includes a vibrating mode and an announcement mode. In the case of the vibrating mode, the control unit 100 indicates the incoming call by vibrating the mobile terminal using a motor (not shown) together with a display of the caller information. When the announcement mode is set, the control unit 100 displays an announcement message indicating an incoming call together with the caller information. The announcement message can be cycled on and off for attracting the user's attention. The announcement message and caller information can be displayed on the multiplexed broadcast screen. The incoming call alert mode can be automatically set as the announcement message mode in the broadcast playback mode, since the user is likely to watch the display screen.

The mobile terminal can be configured such that an outgoing call request can be input by the user during the broadcast playback mode. This is because the digital broadcast can support an interactive program requiring user feedback. For example, the user may need to communicate with another party to order goods or services while watching a shopping program of a specific service channel. Also, the user can participate in an entertainment or gaming program. Since the digital broadcast receiver supports unidirectional communication, the program-related communication channel is established using the RF unit 190. This is because the mobile terminal supports the radio communication using the RF unit 190. The control unit 100 can check the information on the program provider such as phone number and IP address of a department managing the program on the service channel. That is, in the case of DVB-H enabled mobile terminal, the control unit 100 can obtain the phone number and IP address associated with the program of the service channel from the ESG. In the case of DMB-enabled mobile terminal, such information can be obtained from the EPG. Accordingly, if an outgoing call request is input by the user while the mobile terminal operates in the broadcast playback mode, the mobile terminal establishes a communication channel to the phone number by means of RF unit 190 such that the user can transmit a message (for example, product order or vote message) through a communication channel. Also, the mobile terminal can receive a response to the message through the communication channel.

In an exemplary implementation, the user can make a call by positioning a cursor on a service channel item displayed on the broadcast picture screen by manipulating the key input unit 170. For example, the service channel item may include an icon displayed on the display unit 150. The control unit 100 can recognize the position of the cursor on the broadcast picture screen of the display unit 150. Accordingly, if the user places the cursor at a specific position on the screen and requests an outgoing call, the control unit 100 determines the current service channel and program information on the basis of the position of the cursor on the screen and makes a call on the basis of the program information (for example, phone number and IP address) of the current service channel.

If an outgoing call is made in the broadcast playback mode, the user can communicate with a person associated with the current service channel.

Although exemplary embodiments of the present invention are described in detail hereinabove, it should be clearly understood that many variations and/or modifications of the basic inventive concepts herein taught which may appear to those skilled in the present art will still fall within the scope of the present invention, as defined in the appended claims.

As described above, the broadcast picture display method of the present invention allows for quickly capturing broadcast data received on a service channel switched or reset in response to a channel switching and channel reset request and displaying the captured broadcast data during the channel switching or channel reset period, thereby moderating an inconvenience felt during conventional channel switching and channel reset delay. Also, the broadcast picture display method of the present invention enables broadcast data buffered during a channel switching or channel reset period to be played before acquiring synchronization between the video and audio data, resulting in improvement of display functionality of the digital broadcast receiver.

## Claims

1. A broadcast picture display method for a digital broadcast receiver, comprising:
a) setting a service channel in response to a channel switching request during a period the service channel to be switched thereto, wherein the service channel is provided in a digital broadcast system;
b) displaying specific video data detected on the service channel as a picture while an amount of video data buffered in an input video buffer is neither equal to nor greater than a preset amount, wherein the specific video data comprises Intra frame (I-frame) video data; and
when said amount of video data buffered in said input video buffer is equal to or greater than said preset amount
c) start playing audio data (S561);
d) setting a previous playback time to the value of a current local time (S573);
e) detecting if timestamp information has been received (S575);
f) when no timestamp information has been received, and a value obtained by summing a previous playback time and a playback interval is less than the current local time, playing buffered video data at a preset frame rate (S581), and repeating steps d) to f) until the timestamp information is received;
g) when timestamp information has been received, playing the video and audio data in synchronisation with each other, the synchronisation being acquired by compensating a time offset between the video and audio data (S593).

2. A broadcast picture display method for a digital broadcast receiver, comprising:
a) setting a service channel in response to a broadcast playback request, wherein the service channel is provided in a digital broadcast system;
b) displaying specific video data detected on the service channel as a picture while an amount of video data buffered in an input video buffer is neither equal to nor greater than a preset amount, wherein the specific video data comprises Intra frame (I-frame) video data; and
when said amount of video data buffered in said input video buffer is equal to or greater than said preset amount
c) start playing audio data (S561);
d) setting a previous playback time to the value of a current local time (S573);
e) detecting if timestamp information has been received (S575);
f) when no timestamp information has been received, and a value obtained by summing a previous playback time and a playback interval is less than the current local time, playing buffered video data at a preset frame rate (S581), and repeating steps d) to f) until the timestamp information is received;
g) when timestamp information has been received, playing the video and audio data in synchronisation with each other, the synchronisation being acquired by compensating a time offset between the video and audio data (S593).

3. A mobile terminal including a digital broadcast receiver comprising:
a broadcast reception unit (110) for receiving broadcast data;
a display unit (150) for displaying video data; and
a controller (100) for:
a) setting a service channel in response to a channel switching request during a period the service channel to be switched thereto, wherein the service channel is provided in a digital broadcast system and for controlling the broadcast reception unit (110) to receive broadcast data on the service channel;
b) displaying specific video data detected on the service channel as a picture while an amount of video data buffered in an input video buffer is neither equal to nor greater than a preset amount, wherein the specific video data comprises Intra frame (I-frame) video data; and
when said amount of video data buffered in said input video buffer is equal to or greater than said preset amount
c) starting to play audio data (S561);
d) setting a previous playback time to the value of a current local time (S573);
e) detecting if timestamp information has been received (S575);
f) when no timestamp information has been received, and a value obtained by summing a previous playback time and a playback interval is less than the current local time, playing buffered video data at a preset frame rate (S581), and repeating steps d) to f) until the timestamp information is received;
g) when timestamp information has been received, playing the video and audio data in synchronisation with each other, the synchronisation being acquired by compensating a time offset between the video and audio data (S593).

## Patentansprüche

1. Rundfunk-Bildanzeige-Verfahren für einen digitalen Rundfunkempfänger, das umfasst:
a) Festlegen eines Dienstkanals in Reaktion auf eine Kanalumschalt-Anforderung während einer Periode, wobei auf den Dienstkanal umgeschaltet werden soll und der Dienstkanal in einem digitalen Rundfunksystem bereitgestellt wird;
b) Anzeigen auf dem Dienstkanal erfasster spezifischer Video-Daten als ein Bild, während eine in einem Eingangs-Video-Zwischenspeicher zwischengespeicherte Menge an Video-Daten weder genauso groß ist wie noch größer als eine vorgegebene Menge, wobei die spezifischen Video-Daten Intra-Frame-Video-Daten umfassen; und wenn die in dem Eingangs-Video-Zwischenspeicher zwischengespeicherte Menge an Video-Daten genau so groß ist wie oder größer als die vorgegebene Menge:
c) Beginnen, Audio-Daten abzuspielen (S561);
d) Einstellen einer vorhergehenden Wiedergabe-Zeit auf den Wert einer aktuellen lokalen Zeit (S573);
e) Feststellen, ob Zeitstempel-Informationen empfangen worden sind (S575);
f) wenn keine Zeitstempel-Informationen empfangen worden sind und ein Wert, der ermittelt wird, indem eine vorhergehende Wiedergabe-Zeit und ein Wiedergabe-Intervall addiert werden, unter der aktuellen lokalen Zeit liegt, Abspielen zwischengespeicherter Video-Daten mit einer vorgegebenen Frame-Rate (S581) und Wiederholen der Schritte d) bis f), bis die Zeitstempel-Informationen empfangen werden;
g) wenn Zeitstempel-Informationen empfangen worden sind, Abspielen der Video- und Audio-Daten synchron zueinander, wobei die Synchronisation hergestellt wird, indem ein Zeitversatz zwischen den Video- und den Audio-Daten ausgeglichen wird (S593).

2. Rundfunk-Bildanzeige-Verfahren für einen digitalen Rundfunkempfänger, das umfasst:
a) Festlegen eines Dienstkanals in Reaktion auf eine Rundfunk-Wiedergabeanforderung, wobei der Dienstkanal in einem digitalen Rundfunksystem bereitgestellt wird;
b) Anzeigen auf dem Dienstkanal erfasster spezifischer Video-Daten als ein Bild, während eine in einem Eingangs-Video-Zwischenspeicher zwischengespeicherte Menge an Video-Daten weder genauso groß ist wie noch größer als eine vorgegebene Menge, wobei die spezifischen Video-Daten Intra-Frame-Video-Daten umfassen; und wenn die in dem Eingangs-Video-Zwischenspeicher zwischengespeicherte Menge an Video-Daten genau so groß ist wie oder größer als die vorgegebene Menge:
c) Beginnen, Audio-Daten abzuspielen (S561);
d) Einstellen einer vorhergehenden Wiedergabe-Zeit auf den Wert einer aktuellen lokalen Zeit (S573);
e) Feststellen, ob Zeitstempel-Informationen empfangen worden sind (S575);
f) wenn keine Zeitstempel-Informationen empfangen worden sind und ein Wert, der ermittelt wird, indem eine vorhergehende Wiedergabe-Zeit und ein Wiedergabe-Intervall addiert werden, unter der aktuellen lokalen Zeit liegt, Abspielen zwischengespeicherter Video-Daten mit einer vorgegebenen Frame-Rate (S581) und Wiederholen der Schritte d) bis f), bis die Zeitstempel-Informationen empfangen werden;
g) wenn Zeitstempel-Informationen empfangen worden sind, Abspielen der Video- und Audio-Daten synchron zueinander, wobei die Synchronisation hergestellt wird, indem ein Zeitversatz zwischen den Video- und den Audio-Daten ausgeglichen wird (S593).

3. Mobil-Endgerät, das einen digitalen Rundfunkempfänger enthält, der umfasst:
eine Rundfunk-Empfangseinheit (110) zum Empfangen von Rundfunk-Daten;
eine Anzeigeeinheit (150) zum Anzeigen von Video-Daten; und
eine Steuereinrichtung (100), die dazu dient:
a) einen Dienstkanal in Reaktion auf eine Kanalumschalt-Anforderung während einer Periode festzulegen, wobei auf den Dienstkanal umgeschaltet werden soll und der Dienstkanal in einem digitalen Rundfunksystem bereitgestellt wird und die Rundfunk-Empfangseinheit (110) so gesteuert wird, dass sie Rundfunk-Daten auf dem Dienstkanal empfängt;
b) auf dem Dienstkanal erfasste spezifische Video-Daten als ein Bild anzuzeigen, während eine in einem Eingangs-Video-Zwischenspeicher zwischengespeicherte Menge an Video-Daten weder genauso groß ist wie noch größer als eine vorgegebene Menge, wobei die spezifischen Video-Daten Intra-Frame-Video-Daten umfassen; und wenn die in dem Eingangs-Video-Zwischenspeicher zwischengespeicherte Menge an Video-Daten genau so groß ist wie oder größer als die vorgegebene Menge:
c) mit dem Abspielen von Audio-Daten zu beginnen (S561);
d) eine vorhergehende Wiedergabe-Zeit auf den Wert einer aktuellen lokalen Zeit (S573) einzustellen;
e) festzustellen, ob Zeitstempel-Informationen empfangen worden sind (S575);
f) wenn keine Zeitstempel-Informationen empfangen worden sind und ein Wert, der ermittelt wird, indem eine vorhergehende Wiedergabe-Zeit und ein Wiedergabe-Intervall addiert werden, unter der aktuellen lokalen Zeit liegt, zwischengespeicherte Video-Daten mit einer vorgegebenen Frame-Rate (S581) abzuspielen und die Schritte d) bis f) zu wiederholen, bis die Zeitstempel-Informationen empfangen werden;
g) wenn Zeitstempel-Informationen empfangen worden sind, die Video- und Audio-Daten synchron zueinander abzuspielen, wobei die Synchronisation hergestellt wird, indem ein Zeitversatz zwischen den Video- und Audio-Daten ausgeglichen wird (S593).

## Revendications

1. Procédé d'affichage d'image diffusée pour un récepteur de diffusion numérique, comprenant les étapes consistant à :
a) fixer un canal de service en réponse à une demande de commutation de canal durant une période de temps pendant laquelle le canal de service doit être commuté à celui-ci, pour lequel le canal de service est prévu dans un système de diffusion numérique ;
b) afficher des données vidéo spécifiques détectées sur le canal de service comme une image tandis qu'une quantité de données vidéo mémorisée dans un tampon vidéo d'entrée n'est ni égale, ni supérieure à une quantité préétablie, pour lequel les données vidéo spécifiques comprennent des données vidéo d'intra-trame (I-trame) ; et
- quand ladite quantité de données vidéo mémorisée dans ledit tampon vidéo d'entrée est égale ou supérieure à ladite quantité préétablie,
c) commencer la reproduction de données audio (S561) ;
d) fixer un temps de reproduction préalable à la valeur d'un temps local actuel (S573) ;
e) détecter si des informations de référence temporelle ont été reçues (S575) ;
f) lorsqu'aucunes informations de référence temporelle n'ont été reçues, et qu'une valeur, obtenue en faisant la somme d'un temps de reproduction préalable et d'un intervalle de reproduction, est inférieure au temps local actuel, reproduire les données vidéo mémorisées à une vitesse de trame préétablie (S581) et répéter les étapes d) à f) jusqu'à ce que les informations de référence temporelle soient reçues ;
g) lorsque des informations de référence temporelle ont été reçues, reproduire les données vidéo et audio en synchronisme les unes avec les autres, la synchronisation étant acquise en compensant un décalage temporel entre les données vidéo et audio (S593).

2. Procédé d'affichage d'image diffusée pour un récepteur de diffusion numérique, comprenant les étapes consistant à :
a) fixer un canal de service en réponse à une demande de reproduction de diffusion, pour lequel le canal de service est prévu dans un système de diffusion numérique ;
b) afficher des données vidéo spécifiques détectées sur le canal de service comme une image tandis qu'une quantité de données vidéo mémorisée dans un tampon vidéo d'entrée n'est ni égale, ni supérieure à une quantité préétablie, pour lequel les données vidéo spécifiques comprennent des données vidéo d'intra-trame (I-trame) ; et
- quand ladite quantité de données vidéo mémorisée dans ledit tampon vidéo d'entrée est égale ou supérieure à ladite quantité préétablie,
c) commencer la reproduction de données audio (S561) ;
d) fixer un temps de reproduction préalable à la valeur d'un temps local actuel (S573) ;
e) détecter si des informations de référence temporelle ont été reçues (S575) ;
f) lorsqu'aucunes informations de référence temporelle n'ont été reçues, et qu'une valeur, obtenue en faisant la somme d'un temps de reproduction préalable et d'un intervalle de reproduction, est inférieure au temps local actuel, reproduire les données vidéo mémorisées à une vitesse de trame préétablie (S581) et répéter les étapes d) à f) jusqu'à ce que les informations de référence temporelle soient reçues ;
g) lorsque des informations de référence temporelle ont été reçues, reproduire les données vidéo et audio en synchronisme les unes avec les autres, la synchronisation étant acquise en compensant un décalage temporel entre les données vidéo et audio (S593).

3. Terminal mobile comportant un récepteur de diffusion numérique, comprenant :
- une unité de réception de diffusion (110) pour recevoir des données diffusées ;
- une unité d'affichage (150) pour afficher des données vidéo ; et
- un dispositif de commande (100) pour :
a) fixer un canal de service en réponse à une demande de commutation de canal durant une période de temps pendant laquelle le canal de service doit être commuté à celui-ci, pour lequel le canal de service est prévu dans un système de diffusion numérique et pour commander l'unité de réception de diffusion (110) pour recevoir des données diffusées sur le canal de service ;
b) afficher des données vidéo spécifiques détectées sur le canal de service comme une image tandis qu'une quantité de données vidéo mémorisée dans un tampon vidéo d'entrée n'est ni égale, ni supérieure à une quantité préétablie, pour lequel les données vidéo spécifiques comprennent des données vidéo d'intra-trame (I-trame) ; et
- quand ladite quantité de données vidéo mémorisée dans ledit tampon vidéo d'entrée est égale ou supérieure à ladite quantité préétablie,
c) commencer la reproduction de données audio (S561) ;
d) fixer un temps de reproduction préalable à la valeur d'un temps local actuel (S573) ;
e) détecter si des informations de référence temporelle ont été reçues (S575) ;
f) lorsqu'aucunes informations de référence temporelle n'ont été reçues, et qu'une valeur, obtenue en faisant la somme d'un temps de reproduction préalable et d'un intervalle de reproduction, est inférieure au temps local actuel, reproduire les données vidéo mémorisées à une vitesse de trame préétablie (S581) et répéter les étapes d) à f) jusqu'à ce que les informations de référence temporelle soient reçues ;
g) lorsque des informations de référence temporelle ont été reçues, reproduire les données vidéo et audio en synchronisme les unes avec les autres, la synchronisation étant acquise en compensant un décalage temporel entre les données vidéo et audio (S593).
